# EUROPEAN PATENT APPLICATION

(11) **EP 4 345 968 A1**
(43) Date of publication of application: **03.04.2024**
(21) Application number: 22203788.9
(22) Date of filing: 26.10.2022
(51) Int. Cl.: H01M 10/052, H01M 10/054, H01M 10/0568, H01M 4/60, H01M 4/38

(54) **RECHARGEABLE BATTERIES**

(30) Priority: 27.09.2022 US 202263410461 P
(71) Applicant: Massachusetts Institute of Technology, Cambridge, MA 02139 (US)
(72) Inventor: DINCA, Mircea, Belmont, 02478 (US); BANDA, Harish, El Paso, 79912 (US); CHEN, Tianyang, Dorchester Center, 02124 (US)
(74) Representative: Mewburn Ellis LLP

(57) **Abstract**

Rapid charging and high energy density are valuable battery attributes. However, high performance batteries with both of these attributes can be difficult to achieve. Conventional high performance batteries rely on metal-based electrodes including materials that can be difficult to source. Batteries with high capacity, even during rapid charge-discharge cycling, are herein provided. According to some embodiments, a battery provided herein includes an organic electrode and an organic, non-aqueous solvent system. Constituents of the organic electrode may be additionally advantaged by the comparative ease with which they may be sourced.

## Description

### RELATED APPLICATIONS

This application claims priority under 35 U.S.C. § 119(e) to U.S. Provisional Application No. 63/410,461, filed September 27, 2022, and entitled "RECHARGEABLE BATTERIES, INCLUDING ORGANIC BATTERIES," which is incorporated herein by reference in its entirety for all purposes.

### TECHNICAL FIELD

Battery compositions suitable for rapid, high-capacity battery cycling are generally described.

### BACKGROUND

Batteries typically lose capacity when subjected to rapid charge-discharge cycling. Batteries that retain high capacity during charge-discharge cycling are desirable.

### SUMMARY

Rapid charging and high energy density are valuable battery attributes. However, high performance batteries with both of these attributes can be difficult to achieve. Many conventional high performance batteries rely on metal-based electrodes including materials that can be difficult to source. Batteries with high capacity, even during rapid charge-discharge cycling, are herein provided. According to some embodiments, a battery provided herein includes an organic electrode and an organic, non-aqueous solvent system. Constituents of the organic electrode may be additionally advantaged by the comparative ease with which they may be sourced. The subject matter of the present disclosure involves, in some cases, interrelated products, alternative solutions to a particular problem, and/or a plurality of different uses of one or more systems and/or articles.

According to one aspect, a battery is provided. In some embodiments, the battery, comprises: an electrode comprising an active material comprising a *bis-*tetraamino-benzoquinone molecule of the structure: 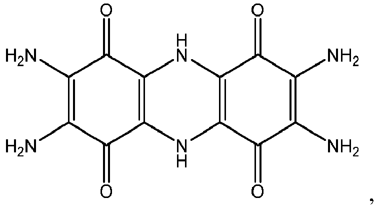 and/or a dimer, tautomer, oligomer, or polymer thereof; and an electrolyte comprising an organic, non-aqueous solvent system.

In another aspect, a battery is provided. According to some embodiments, the battery comprises: an electrode comprising an organic, active material, wherein the battery is configured such that, when fully discharged, the battery can be charged to a capacity of greater than or equal to 135 mAh per gram of the electrode in less than or equal to 6 minutes.

In still another aspect, a battery is provided. According to some embodiments, the battery comprises: an electrode comprising an active material; wherein the active material comprises at most trace amounts of Ni and Co; and wherein the battery is configured such that, when fully discharged, the battery can be charged to a capacity of greater than or equal to 135 mAh per gram of the electrode in less than or equal to 6 minutes.

Other advantages and novel features of the present disclosure will become apparent from the following detailed description of various non-limiting embodiments of the disclosure when considered in conjunction with the accompanying figures. In cases where the present specification and a document incorporated by reference include conflicting and/or inconsistent disclosure, the present specification shall control.

### BRIEF DESCRIPTION OF THE DRAWINGS

Non-limiting embodiments of the present disclosure will be described by way of example with reference to the accompanying figures, which are schematic and are not intended to be drawn to scale unless otherwise indicated. In the figures, each identical or nearly identical component illustrated is typically represented by a single numeral. For purposes of clarity, not every component is labeled in every figure, nor is every component of each embodiment of the disclosure shown where illustration is not necessary to allow those of ordinary skill in the art to understand the disclosure. In the figures:
FIG. 1 presents a schematic, cross-sectional illustration of a battery, according to some embodiments;
FIG. 2 compares the voltage and specific capacity of an exemplary single-cell lithium-ion battery, according to some embodiments;
FIG. 3 compares the voltage and specific capacity of an exemplary single-cell lithium-ion battery, according to some embodiments;
FIG. 4 compares the voltage and specific capacity of an exemplary single-cell sodium-ion battery, according to some embodiments;
FIGS. 5A-5B compare the voltage and specific capacity of a plurality of batteries comprising different electrolytes, according to some embodiments;
FIG. 6 compares the specific capacity of batteries charged at a plurality of charging rates, according to some embodiments;
FIG. 7 compares the energy density of batteries charged at a plurality of power densities, according to some embodiments;
FIG. 8 compares the energy density of batteries over time during discharge, according to some embodiments;
FIG. 9 shows the specific capacity of a non-limiting battery during discharge, according to some embodiments; and
FIG. 10 shows the specific capacity of a non-limiting battery that was subjected to charge-discharge cycles until it reached its 80% cycle life, according to some embodiments.

### DETAILED DESCRIPTION

High demand for electrification of the transportation sector and decarbonization of the transportation grid requires development of improved battery systems. Some improvements can include high performance, long cycle life, rapid charging, etc. Many commonly used batteries (often lithium-ion cells with nickel-cobalt-manganese cathodes) can have undesirably slow charge/discharge times. Furthermore, these materials can be difficult and energy-intensive to source. Provided herein are certain organic materials, and electrodes and/or batteries which can include them, that exhibit one or more of high charge capacity of lithium-ion cells with fast charging and long cycling life, optionally in a single battery. Such organic materials may, in some instances, be easier to source than conventional battery materials, offering an additional benefit for their use.

Batteries as described in this disclosure may have any of a variety of suitable structures or designs. Generally, a battery comprises an electrode including an electrochemically active material (also referred to herein as an "active material"), which can be a charge storage material. The battery may comprise more than one electrode, for example, a first electrode (e.g., a cathode) and a second electrode (e.g., an anode).

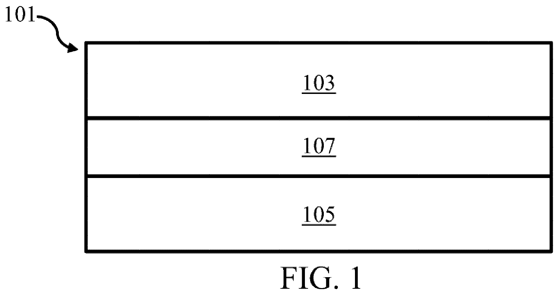

For purposes of describing various embodiments herein, FIG. 1 presents a schematic, cross-sectional illustration of exemplary battery 101 comprising first electrode 103 and second electrode 105, separated by electrolyte 107. The battery may comprise more than one active material. For example, first electrode 103 may be or comprise a first active material and second electrode 107 may be or comprise a second active material. Multiple active materials can be provided in single electrodes, as the disclosure is not so limited.

In one aspect, a material is provided that has advantageous electrochemical properties, which can be used as an electrode, which itself can be configured for use in a battery. Such materials will be referred to generally as "electrode materials" herein, and these possess abundant redox-active sites making them suitable as high capacity and high power materials, as the redox-active sites rapidly transport electric and ionic charges throughout the bulk of the material (e.g., the bulk of an electrode that includes the material).

In one set of embodiments, materials disclosed herein, which can be configured for use as a battery electrode, are primarily or entirely organic materials. These materials can offer great structural tunability and synthetic feasibility for diverse designs of electrode materials that utilize earth-abundant elements. However, due to their poor intrinsic electrical conductivity, limited electronic delocalization, and high solubility in electrolytes, many prior conventional organic molecules deliver inferior electrochemical performances. Organic materials for use herein, however, exhibit enhanced charge transport, ion transport, and/or charge storage. The organic materials may be insoluble organic solids, and may provide other additional or alternative advantages.

According to one aspect, an active material which can be used as an electrode which can be configured for use in a battery is provided (this material will be referred to many times herein as a "battery material," and it is to be understood that the material, while being suitable for that use, can have other uses and/or can optionally be provided in a configuration that is not an electrode, or not a battery). Those of ordinary skill in the art will readily and precisely understand what is meant by a material that "can be used as an electrode." This means material which itself, and/or on conjunction with other matter with which it can be compounded, synthesized, or otherwise combined, provides the requisite level of cohesiveness and structural self-support (if that is needed; in some cases materials need not be self-supporting but can be positioned with the assistance of auxiliary structure such as a container), electronic and ionic conductivity, and other features recognized as useful. An electrode "configured for use in a battery" will also be understood readily by those of ordinary skill in the art as having requisite properties for connection to a circuit (which can eventually connect to another electrode in the battery), interface with an electrolyte (solid and/or liquid; without undue damage/degradation), and the like. Those of skill will quickly recognize a variety of factors that would accompany such an electrode, and will understand which factors are optional rather than necessary.

The active materials provided herein may comprise relatively limited quantities of certain metal atoms. For example, in some embodiments, an electrode comprises an active material that comprises at most a trace amount of Ni and/or Co. In some embodiments, an active material in an electrode includes Ni and/or Co in a total amount of less than or equal to 5 wt%, less than or equal to 2 wt%, less than or equal to 1 wt%, less than or equal to 0.5 wt%, less than or equal to 0.2 wt%, less than or equal to 0.1 wt%, less than or equal to 0.05 wt%, less than or equal to 0.02 wt%, less than or equal to 0.01 wt% versus the total weight of the active material in the electrode. Other ranges are also possible.

The Inventors have realized and appreciated that fused aromatic materials, for example those comprising bis-tetraaminobenzoquinone (BTABQ) and oligomers and/or polymers thereof, may used as electrode active materials and are suitable for batteries. The fused aromatic materials possess dense redox-active sites in the aromatic backbone with extended conjugation. In some embodiments, for example, the carbon to heteroatom (e.g., N, O) ratio of the material is less than 1.3. The materials form insoluble solids in both organic and aqueous media through strong intermolecular hydrogen bonding and donor-acceptor *π*-*π* interactions. Fused aromatic materials, such as those comprising BTABQ and oligomers and/or polymers thereof, exhibit excellent charge-storage capacities at high charge-discharge rates in various electrolytes. The advantageous properties of fused organic materials may be associated with electronic delocalization and facile ion transport, which may be facilitated by a dense presence of redox-active groups and an alternating arrangement of electron donor and electron acceptor aromatic rings in the fused aromatic material.

According to certain embodiments, a composition of an active material is described. The composition comprises, in some embodiments, an organic material. In certain embodiments, for example, the composition comprises a fused aromatic system. As used herein, the term "fused aromatic system" is given its ordinary meaning in the art and generally refers to two or more cyclic (e.g., monocyclic, bicyclic, tricyclic, etc.) aromatic rings that share connecting bonds, and/or a plurality of two or more cyclic (e.g., monocyclic, bicyclic, tricyclic, etc.) aromatic rings that share connecting bonds. In some embodiments, for example, the fused aromatic system may comprise one or more fused aromatic molecules comprising at least two aromatic rings that share connecting bonds. As would generally be understood by a person of ordinary skill in the art, the fused aromatic system may be an extended conjugation system that advantageously facilitates electronic charge and diffusion of ionic charges.

The fused aromatic system may comprise carbon atoms and hydrogen atoms, as would generally be understood by a person of ordinary skill in the art. In certain embodiments, the fused aromatic system may comprise one or more heteroatoms replacing a carbon atom. Examples of suitable heteroatoms include, for example, nitrogen (N), oxygen (O), sulfur (S), and/or selenium (Se).

According to certain embodiments, the fused aromatic system has any of a variety of suitable ratios of carbon atoms to heteroatoms (e.g., N, O, S, and/or Se). A relatively low ratio of carbon atoms to heteroatoms (e.g., less than 2) advantageously provides a system with more redox-active sites as compared to a system with a high ratio of carbon atoms to heteroatoms (e.g., greater than 2) but is otherwise equivalent, thereby providing sufficient transport pathways for electric and/or ionic charges through the bulk of the material. In certain embodiments, for example, the fused aromatic system may comprise a relatively high number of redox-active sites, including, but not limited to, carbonyl groups, amine groups, and/or imine groups. The presence of heteroatoms in the fused aromatic system may also advantageously provide an alternating arrangement of electron donor and electron acceptor aromatic rings, therefore facilitating the transport of electric and/or ionic charges through the bulk of the material.

In some embodiments, the ratio of carbon atoms to heteroatoms in the fused aromatic system is greater than 1, greater than or equal to 1.1, greater than or equal to 1.2, greater than or equal to 1.3, greater than or equal to 1.4, greater than or equal to 1.5, greater than or equal to 1.6, greater than or equal to 1.7, greater than or equal to 1.8, or greater than or equal to 1.9. In certain embodiments, the ratio of carbon atoms to heteroatoms in the fused aromatic system is less than 2, less than or equal or equal to 1.9, less than or equal to 1.8, less than or equal to 1.7, less than or equal to 1.6, less than or equal to 1.5, less than or equal to 1.4, less than or equal to 1.3, less than or equal to 1.2, or less than or equal to 1.1. Combinations of the above recited ranges are also possible (e.g., the ratio of carbon atoms to heteroatoms in the fused aromatic system is between greater than 1 and less than 2, the ratio of carbon atoms to heteroatoms in the fused aromatic system is between greater than 1.2 and less than 1.4). Other ranges are also possible.

In certain embodiments, at least a portion of the fused aromatic system may be interconnected via one or more hydrogen-bonding interactions. In some embodiments, for example, at least a portion of BTABQ molecules, oligomers, and/or polymers thereof may interact with each other in a planar and/or two-dimensional configuration via hydrogen-bonding. According to some embodiments, the hydrogen-bonding interactions may be between one or more hydrogen atoms and one more oxygen atoms (e.g., of a carbonyl group) and/or one or more nitrogen atoms (e.g., of an amine group and/or imine group). Without wishing to be bound by theory, interconnection of the fused aromatic system via hydrogen-bonding interactions may advantageously facilitate electronic charge delocalization and diffusion of ionic charges through the fused aromatic system. In some embodiments, interconnection of the fused aromatic system via hydrogen-bonding may also advantageously result in a solid material that is insoluble in organic and aqueous media, thereby providing a suitable material for use in electrodes.

The fused aromatic system may have any of a variety of suitable hydrogen-bonding interactions. In some embodiments, for example, the number of hydrogen-bonding interactions in the fused aromatic system is greater than or equal to 0.1, greater than or equal to 0.2, greater than or equal to 0.3, greater than or equal to 0.4, greater than or equal to 0.5, greater than or equal to 0.6, greater than or equal to 0.7, greater than or equal to 0.8, or greater than or equal to 0.9 hydrogen-bonds per mole of carbon atoms in the fused aromatic system. In certain embodiments, the number of hydrogen-bonding interactions in the fused aromatic system is less than or equal to 1, less than or equal to 0.9, less than or equal to 0.8, less than or equal to 0.7, less than or equal to 0.6, less than or equal to 0.5, less than or equal to 0.4, less than or equal to 0.3, or less than or equal to 0.2 hydrogen-bonds per mole of carbon atoms in the fused aromatic system is between greater than or equal to 0.33 and less than or equal to 1 hydrogen-bonds per mole of carbon atoms. Combinations of the above recited ranges are also possible (e.g., the number of hydrogen-bonding interactions in the fused aromatic system is between greater than or equal to 0.1 and less than or equal to 1 hydrogen-bonds per mole of carbon atoms in the fused aromatic system). Other ranges are also possible. In certain embodiments, the number of hydrogen-bonding interactions in the fused aromatic system may be determined by structural and elemental analysis.

The fused aromatic system may have any of a variety of suitable π-π interactions (e.g., donor-accept π-π interactions). For example, in certain embodiments, at least a portion of the fused aromatic system is configured in a stacked and/or three-dimensional configuration via one or more π-π interactions. Without wishing to be bound by theory, interconnection of the fused aromatic system via π-π interactions may advantageously facilitate electronic charge delocalization and diffusion of ionic charges through the fused aromatic system. In some embodiments, interconnection of the fused aromatic system via π-π may also advantageously result in a solid material that is insoluble in organic and aqueous media, thereby providing a suitable material for use in electrodes.

In some embodiments, the average interlayer distance between the portion of the fused aromatic system configured in a stacked and/or three-dimensional configuration via one or more π-π interactions may be greater than or equal to 2 Å, greater than or equal to 2.5 Å, greater than or equal to 3 Å, or greater than or equal to 3.5 Å. In certain embodiments, the average interlayer distance between the portion of the fused aromatic system configured in a stacked and/or three-dimensional configuration via one or more π-π interactions may be less than or equal to 4 Å, less than or equal to 3.5 Å, less than or equal to 3 Å, or less than or equal to 2.5 Å. Combinations of the above recited ranges are also possible (e.g., the average interlayer distance between the portion of the fused aromatic system configured in a stacked and/or three-dimensional configuration via one or more π-π interactions is between greater than or equal to 2 Å and less than or equal to 4 Å, the average interlayer distance between the portion of the fused aromatic system configured in a stacked and/or three-dimensional configuration via one or more π-π interactions is between greater than or equal to 3 Å and less than or equal to 3.5 Å). Other ranges are also possible. In certain embodiments, the average interlayer distance between the portion of the fused aromatic system configured in a stacked and/or three-dimensional configuration via one or more π-π interactions may be determined by structural analysis and/or microscopic methods.

As explained herein, the composition may have low solubility in organic and aqueous solvents at ambient temperature and pressure due at least in part to the hydrogen-bonding interactions and/or π-π interactions of the fused aromatic system. In some embodiments, it may be advantageous for the composition to have a low solubility in organic and aqueous solvents, as the fused aromatic system may be used as an electrode active material.

The fused aromatic system may have any of a variety of suitable solubilities. In certain embodiments, for example, the fused aromatic system has a solubility less than or equal to less than or equal to 2 millimoles per liter of solvent (e.g., an organic solvent and/or an aqueous solvent), less than or equal to 1.5 millimoles per liter of solvent, less than or equal to 1 millimole per liter of solvent, less than or equal to 0.5 millimoles per liter of solvent, or less. According to some embodiments, the fused aromatic system has a solubility greater than 0 millimoles per liter of solvent (e.g., an organic solvent and/or an aqueous solvent), greater than or equal to 0.1 millimoles per liter of solvent, greater than or equal to 0.5 millimoles per liter of solvent, greater than or equal to 1 millimole per liter of solvent, or greater than or equal to 1.5 millimoles per liter of solvent per liter of solvent. Combinations of the above recited ranges are also possible (e.g., the fused aromatic system has a solubility between less than or equal to 2 millimoles per liter of solvent and greater than 0 millimoles per liter of solvent, the fused aromatic system has a solubility between greater than or equal to 0.5 millimoles per liter of solvent and less than or equal to 1.5 millimoles per liter of solvent). Other ranges are also possible.

According to some embodiments, the composition comprises a molecule of the structure (and/or a plurality of molecules of the structure): 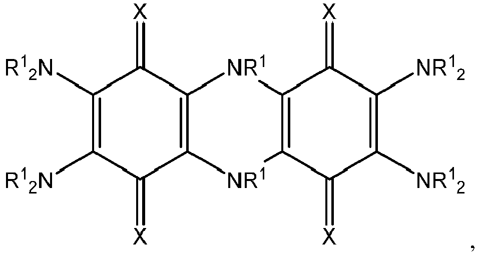 wherein X is selected from the group consisting of O, S, Se, or NR¹, and wherein each R¹ is the same or different and is selected from the group consisting of hydrogen (-H), optionally substituted alkyl (e.g., -CH₃), optionally substituted alkenyl (e.g., -CH=CH₂), or optionally substituted alkynyl (e.g., -C≡CH). Tautomers and/or isomers of the structure shown above are also possible, in some embodiments.

In certain embodiments, for example, the composition comprises tetraamino-dihydrophenazine-1,4,6,9-tetrone, referred to herein as bis-tetraamino-benzoquinone (BTABQ). In certain embodiments, BTABQ has the structure:

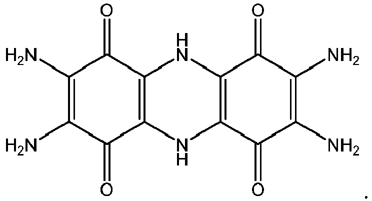

In some embodiments, the composition comprises a plurality of BTABQ molecules. Tautomers and/or isomers of the BTABQ structure shown above are also possible, in some embodiments.

According to certain embodiments, BTABQ may be synthesized from a tetraamino-p-benzoquinone (TABQ) molecule of the structure:

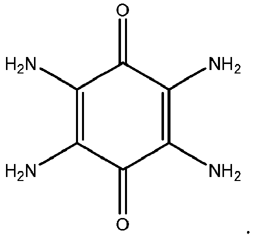

TABQ may be purchased commercially and/or synthesized using techniques known to a person of ordinary skill in the art. According to some embodiments, BTABQ may be formed from TABQ via a one-step Michael addition and elimination with a loss of ammonia.

According to certain embodiments, the composition comprises an oligomer and/or polymer of BTABQ (and/or a plurality of oligomers and/or polymers of BTABQ). The oligomer and/or polymer of BTABQ may take any of a variety of suitable forms. In some embodiments, for example, the oligomer and/or polymer of BTABQ is of the structure: 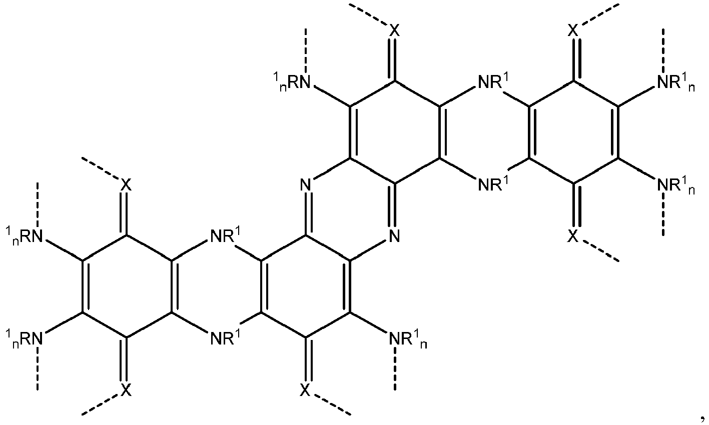 wherein each dotted line independently represents either a bond of another aromatic ring of the fused aromatic system or a terminal end of the fused aromatic system. In some embodiments wherein a dotted line represents a bond of another aromatic ring of the fused aromatic system, X may be N, R¹ may be selected from the group consisting of hydrogen (-H), optionally substituted alkyl (e.g., -CH₃), optionally substituted alkenyl (e.g., -CH=CH₂), or optionally substituted alkynyl (e.g., -C≡CH), and n may be 1. In certain embodiments wherein a dotted line represents a terminal end of the fused aromatic system, X may be selected from the group consisting of O, S, Se, or NR¹, R¹ may be selected from the group consisting of hydrogen (-H), optionally substituted alkyl (e.g., -CH₃), optionally substituted alkenyl (e.g., -CH=CH₂), or optionally substituted alkynyl (e.g., -C≡CH), and n may be 2. Tautomers and/or isomers of the structure shown above are also possible, in some embodiments.

As would generally be understood by a person of ordinary skill in the art, in certain embodiments wherein a dotted line represents a bond of another aromatic ring of the fused aromatic system, the fused aromatic system may continue to extend, via one or more fused aromatic rings, beyond the aromatic ring formed by the bond represented by the dotted line.

In some embodiments, the oligomer and/or polymer of BTABQ is of the structure: 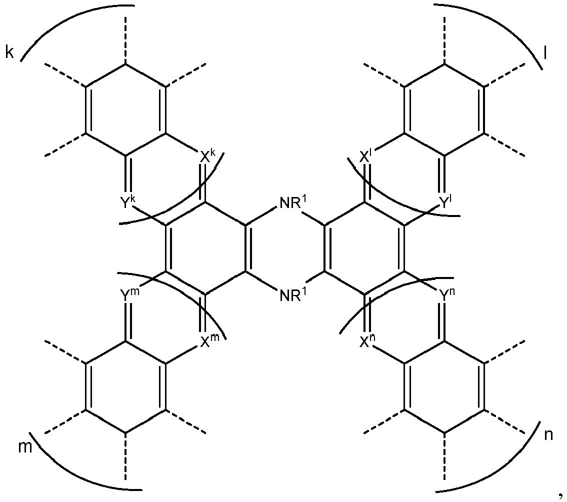 wherein when k is greater than 0, X^{k} and Y^{k} are N; when k is 0, X^{k} is O and Y^{k} is NR¹; when 1 is greater than 0, X^{l} and Y^{l} are N; when k is 0, X^{l} is O and Y^{l} is NR^{1;} when m is greater than 0, X^{m} and Y^{m} are N; when m is 0, X^{m} is O and Y^{m} is NR¹; when n is greater than 0, Xⁿ and Yⁿ are N; when n is 0, Xⁿ is O and Yⁿ is NR¹, and wherein R¹ is selected from the group consisting of hydrogen (-H), optionally substituted alkyl (e.g., -CH₃), optionally substituted alkenyl (e.g., -CH=CH₂), or optionally substituted alkynyl (e.g., - C≡CH)

In some non-limiting embodiments, the oligomer and/or polymer of BTABQ has the structure: or 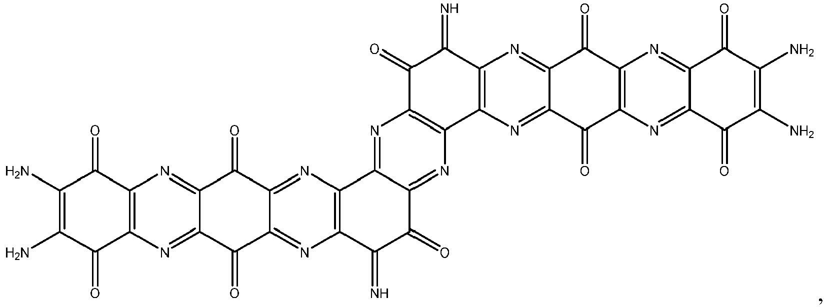 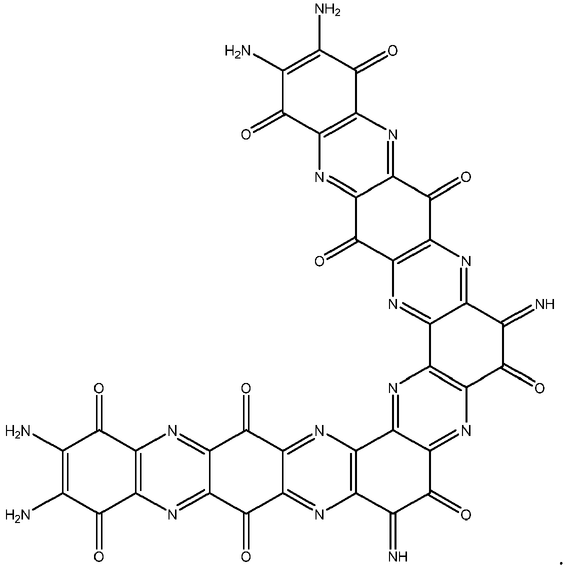 Tautomers and/or other isomers of the structures shown above are also possible.

The structure of the oligomer and/or polymer of BTABQ may be determined, in some embodiments, based on elemental analysis, matrix-assisted laser desorption/ionization-time of flight (MALDI-TOF) mass spectrometry, and/or X-ray photoelectron spectroscopy.

According to certain embodiments, the oligomer and/or polymer of BTABQ may be synthesized via polycondensation of BTABQ in the presence of heat with a loss of water. In some embodiments, the polycondensation reaction may be a ladderization reaction.

The active materials and associated compositions described above may be used in any of a variety of appropriate electrodes. For example, an active material described herein may be used in a first electrode (e.g., a cathode) or in a second electrode (e.g., an anode), depending on the application. In some embodiments, the use of active materials having a composition described above have been observed to perform particularly well when used as an active material of a cathode.

In addition to the active material, in some embodiments, an electrode comprises one or more inactive materials. The electrode may comprise an inactive material that increases conductivity of the electrode. For example, the electrode may comprise a conductive carbon material (e.g., graphite, graphene, or carbon nanotubes). As another example, the electrode may comprise a dielectric material, such as a dielectric polymer (e.g., polyvinylidene fluoride, carboxymethylcellulose). An inactive material may be included in any of a variety of appropriate proportions, relative to the total mass of the electrode. Alternatively, in some embodiments, an electrode consists only of one or more active materials, and does not include an inactive material.

An electrode may include an active material in any of a variety of suitable mass-loadings. In some embodiments, an electrode has a mass loading of greater than or equal to 1 mg/cm², greater than or equal to 2 mg/cm², greater than or equal to 3 mg/cm², greater than or equal to 5 mg/cm², greater than or equal to 8 mg/cm², greater than or equal to 10 mg/cm², greater than or equal to 12 mg/cm², greater than or equal to 15 mg/cm², or greater. In some embodiments, an electrode has a mass loading of less than or equal to 20 mg/cm², less than or equal to 18 mg/cm², less than or equal to 15 mg/cm², less than or equal to 12 mg/cm², less than or equal to 10 mg/cm², less than or equal to 8 mg/cm², less than or equal to 5 mg/cm², less than or equal to 3 mg/cm², less than or equal to 2 mg/cm², or less. Combinations of these ranges are possible. For example, in some embodiments, an electrode has a mass loading of greater than or equal to 1 mg/cm² and less than or equal to 20 mg/cm². Other ranges are also possible.

A first electrode described herein may be a cathode. The cathode may comprise a variety of cathode active materials. As used herein, the term "cathode active material" refers to an active material associated with the cathode.

In some embodiments, the cathode may have a thickness of less than or equal to 2000 micrometers, less than or equal to 1500 micrometers, less than or equal to 1250 micrometers, less than or equal to 1000 micrometers, less than or equal to 750 micrometers, less than or equal to 500 micrometers, or less than or equal to 200 micrometers. In certain embodiments, the cathode may have a thickness of at least 1 micrometer, at least 5 micrometers, at least 10 micrometers, at least 25 micrometers, at least 50 micrometers, at least 100 micrometers, or at least 150 micrometers. Combinations of the above-referenced ranges are also possible (e.g., from 1 micrometer to 2000 micrometers). Other ranges are also possible.

A second electrode described herein may be an anode. The anode may comprise a variety of anode active materials. As used herein, the term "anode active material" refers to an active material associated with the anode.

In some embodiments, the anode may have a thickness of less than or equal to 1500 micrometers, less than or equal to 1250 micrometers, less than or equal to 1000 micrometers, less than or equal to 750 micrometers, less than or equal to 500 micrometers, or less than or equal to 200 micrometers. In certain embodiments, the anode may have a thickness of at least 1 micrometer, at least 5 micrometers, at least 10 micrometers, at least 25 micrometers, at least 50 micrometers, at least 100 micrometers, or at least 150 micrometers. Combinations of the above-referenced ranges are also possible (e.g., from 1 micrometer to 1500 micrometers). Other ranges are also possible.

As described herein, the electrochemical cell may, in some embodiments, comprise an electrolyte. For example, referring again to FIG. 1, battery 101 comprises electrolyte 107 between first electrode 103 and second electrode 105. The electrolyte may be at least partially disposed between a first electrode and a second electrode of the battery and/or infiltrate one or more electrode at least in part. As would generally be understood by a person of ordinary skill in the art, electrolytes used in electrochemical cells can function as a medium for the storage and transport of ions. In the special case of solid and/or gel electrolytes, these materials may additionally function as a separator between a first electrode and a second electrode. Any of a variety of liquid, solid, or gel material capable of storing and transporting ions may be used, so long as the material facilitates the transport of ions between the anode and the cathode. The electrolyte is generally electronically non-conductive, to prevent short circuiting between the anode and the cathode. The electrolyte can comprise one or more liquid electrolyte solvents, gel polymer materials, or polymer materials. The electrolyte may comprise one or more ionic electrolyte salts to provide and/or enhance ionic conductivity.

In some cases, the electrochemical chemical cell comprises a liquid electrolyte. In particular, the present disclosure recognizes unexpected advantages associated with the use of liquid electrolytes that include organic, non-aqueous solvent systems used in combination with an electrode active material described above. A non-aqueous electrolyte generally comprises no water, or only a trace amount of water. For example, in some embodiments, the non-aqueous electrolyte comprises water in an amount of less than or equal to 5 wt%, less than or equal to 4 wt%, less than or equal to 3 wt%, less than or equal to 2 wt%, less than or equal to 1 wt%, less than or equal to 0.5 wt%, less than or equal to 0.2 wt%, less than or equal to 0.1 wt%, less than or equal to 0.05 wt%, less than or equal to 0.02 wt% or less than or equal to 0.01 wt% vs. the total weight of the electrolyte. Other ranges are also possible.

Suitable non-aqueous electrolytes may include organic solvents. These electrolytes may optionally include one or more ionic electrolyte salts (e.g., to provide and/or enhance ionic conductivity). Examples of useful non-aqueous organic liquid electrolyte solvents include, but are not limited to, acetonitrile, carbonates (e.g., propylene carbonate (PC), ethylene carbonate (EC), dimethyl carbonate (DMC), diethyl carbonate (DEC)), 1,3-dioxolane (DOL), dimethoxyethane (DME), diethylene glycol dimethyl ether (diglyme), and/or tetraethylene glycol dimethyl ether (TEGDME). Other non-aqueous organic liquid electrolyte solvents are possible, as the disclosure is not meant to be limiting in this regard.

Any of a variety of suitable ions may be used in the battery. For example, in some embodiments, the battery is a lithium-ion battery. In some embodiments, the battery is a sodium-ion battery. In other embodiments, the battery can be a potassium-ion battery, a magnesium-ion battery, a zinc-ion battery, a calcium-ion battery, an aluminum-ion battery, or an iron-ion battery. Additionally or alternatively, the battery may rely on transportation of any of a variety of other ions between battery electrodes during charging and/or discharging. The battery can also be a metal battery, such as a lithium metal battery, a sodium metal battery, a zinc metal battery or a magnesium metal battery, and the battery may include a solid-state or liquid electrolyte formulation, in some embodiments.

The electrolyte may comprise one or more ionic electrolyte salts, generally known in the art, to provide and/or enhance the ionic conductivity of the electrolyte. In some cases (e.g., in a lithium-ion battery), the ionic electrolyte salt is a lithium salt (e.g., LiPF₆). According to some embodiments (e.g., in a sodium-ion battery) the ionic electrolyte salt is a sodium salt (e.g., NaCl, Na₂HPO₄, or Na₂CO₃). In some embodiments, the salt is a potassium salt or a magnesium salt. In some cases, the salt can be chloride salt (e.g., NaCl), a hydrogen phosphate salt (Na₂HPO₄), a carbonate salt (Na₂CO₃), and/or citric acid. In some embodiments, a salt comprises a metal cation (e.g., Li⁺, Na⁺, K⁺, and Mg²⁺) in combination with an organic anion (e.g., hexafluoroarsenate, hexafluorophosphate, perchlorate, tetrafluoroborate, tris(pentafluoroethyl)trifluorophosphate, trifluoromethanesulfonate, bis(fluorosulfonyl)imide, cyclo-difluoromethane-1,1-bis(sulfonyl)imide), bis(perfluoroethanesulfonyl)imide, bis(trifluoromethanesulfonyl)imide, bis(perfluoroethanesulfonyl)imide, bis(oxalate)borate, difluoro(oxalato)borate, bis(fluoromalonato)borate, tetracyanoborate, dicyanotriazolate, dicyano-trifluoromethyl-imidazole, dicyano-pentafluoroethyl-imidazole). Other ionic electrolyte salts are also possible, as the disclosure is not meant to be limiting in this regard.

In some embodiments, an electrochemical cell includes a separator, which can be configured to inhibit (e.g., prevent) physical contact between a first electrode and a second electrode, i.e., which can prevent short circuiting of the electrochemical cell. The separator generally comprises a polymeric material. In some embodiments, the separator is located between the electrolyte and an electrode (e.g., a first electrode, a second electrode, an anode, a cathode). In other embodiments, the electrolyte permeates a separator, so that the separator contacts an electrode which is also contacted by the electrolyte.. The separator can be configured to be substantially electronically non-conductive, which can inhibit the degree to which the separator causes short circuiting of the electrochemical cell. Those of ordinary skill will readily be able to select a separator or separators suitable for use in an electrochemical cell, such as a battery, with battery materials disclosed herein if/ as needed, based on battery materials and other factors.

The electrode (e.g., electrochemically active charge storage material) may have any of a variety of suitable charge capacities per gram of active material. In certain embodiments, for example, the electrode has a charge capacity greater than or equal to 50 mAh, greater than or equal to 100 mAh, greater than or equal to 150 mAh, greater than or equal to 200 mAh, greater than or equal to 250 mAh, greater than or equal to 300 mAh, greater than or equal to 350 mAh, greater than or equal to 400 mAh, or greater than or equal to 450 mAh per gram of active material. In some embodiments, the electrode has a charge capacity less than or equal to 500 mAh, less than or equal to 450 mAh, less than or equal to 400 mAh, less than or equal to 350 mAh, less than or equal to 300 mAh, less than or equal to 250 mAh, less than or equal to 200 mAh, less than or equal to 150 mAh, or less than or equal to 50 mAh per gram of active material. Combinations of the above recited ranges are possible (e.g., the electrode has a charge capacity between greater than or equal to 50 mAh and less than or equal to 450 mAh per gram of active material, the electrode has a charge capacity between greater than or equal to 150 mAh and less than or equal to 200 mAh per gram of active material). Other combinations are also possible.

The electrode (e.g., electrochemically active charge storage material) may have any of a variety of suitable charge capacities per gram of electrode. In some embodiments, for example, the electrode has a charge capacity greater than or equal to 30 mAh, greater than or equal to 50 mAh, greater than or equal to 100 mAh, greater than or equal to 150 mAh, greater than or equal to 200 mAh, greater than or equal to 250 mAh, or greater than or equal to 300 mAh per gram of electrode. In some embodiments, the electrode has a charge capacity less than or equal to 350 mAh, less than or equal to 300 mAh, less than or equal to 250 mAh, less than or equal to 200 mAh, less than or equal to 150 mAh, less than or equal to 100 mAh, or less than or equal to 50 mAh per gram of electrode. Combinations of the above recited ranges are possible (e.g., the electrode has a charge capacity between greater than or equal to 30 mAh and less than or equal to 350 mAh per gram of electrode, the electrode has a charge capacity between greater than or equal to 100 mAh and less than or equal to 150 mAh per gram of electrode). Other combinations are also possible.

According to certain embodiments, the charge capacities described above (i.e., the charge capacity per gram of active material and/or the charge capacity per gram of electrode) may be delivered at a relatively fast charge and/or discharge rate as compared to conventional capacitor systems. The battery may be charged and/or discharged using a steady-state condition (e.g., by charging with constant-voltage or constant-current). Of course, the battery may be charged in multiple stages (e.g., combinations of constant-voltage stages and constant-current stages) or using a non-steady-state condition (e.g., charging using a time-variant voltage and current) as the disclosure is not so limited.

In some embodiments, the charge capacity is delivered at charge and/or discharge rate that is less than or equal to 1 hour, less than or equal to 30 minutes, less than or equal to 15 minutes, less than or equal to 6 minutes, less than or equal to 60 seconds, less than or equal to 50 seconds, less than or equal to 40 seconds, less than or equal to 30 seconds, or less than or equal to 20 seconds. In certain embodiments, the charge capacity is delivered at a charge and/or discharge rate that is greater than or equal to 10 seconds, greater than or equal to 20 seconds, greater than or equal to 30 seconds, greater than or equal to 40 seconds, or greater than or equal to 50 seconds. Combinations of the above recited ranges are also possible (e.g., the charge capacity is delivered at a charge and/or discharge rate that is between less than or equal to 1 hour and greater than or equal to 10 seconds, the charge capacity is delivered at a charge and/or discharge rate that is greater than or equal to 30 seconds and less than or equal to 6 minutes). Other ranges are also possible. These ranges may also be combined with ranges of the forgoing paragraphs (e.g., in some embodiments, greater than or equal to 135 mAh per gram of active material can be charged to and/or discharged from the electrode in less than or equal to 6 minutes, and/or greater than or equal to 135 mAh per gram of active material can be charged to and/or discharged from the electrode in less than or equal to 1 hour). Other ranges are also possible. Any of the foregoing rates of charge and/or discharge may be applicable during constant-current or constant-voltage charging, or during charging and/or discharging with time-variant voltage and current, as the disclosure is not so limited.

During constant-current charging, any of the forgoing charge/discharge rates may be expressed in units of "C", a unit of total charge capacity per hour. The rate in units of "C" may be determined by multiplying the delivered charge capacity (as a proportion of total battery capacity) by the reciprocal of the time (in hours) required to deliver that charge capacity. For example, delivery of the entire capacity of the battery (100% = 1) over the course of exactly 1 hour yields a charge capacity at a rate of 1/1 hour = 1 C. As another example, delivery of the entire capacity of the battery (100% = 1) over the course of exactly 6 minutes yields charge capacity at a rate of 1/0.1 hours = 10 C.

According to some embodiments, it is advantageous for a battery to have a long cycle life. A cycle life, as used herein, refers to a number of charge-discharge cycles that a battery can undergo before its maximum capacity falls below a certain threshold. The threshold may be expressed as a percentage, in terms of the battery's initial maximum capacity. For example, the cycle life of a battery may be the number of charge-discharge cycles that the electrochemical cell can undergo before its capacity falls below a threshold value of 90%, 80%, 70%, 60%, or 50% of its initial maximum capacity.

In some embodiments, for example, the battery has a cycle life of greater than or equal to 100 cycles, greater than or equal to 200 cycles, greater than or equal to 500 cycles, greater than or equal to 1,000 cycles, greater than or equal to 1,500 cycles, or greater than or equal to 2,000 cycles. In certain embodiments, the battery has a cycle life of less than or equal to 5,000 cycles, less than or equal to 4,000 cycles, less than or equal to 3,000 cycles, or less than or equal to 2,000 cycles. Combinations of the above recited ranges are possible (e.g., the battery has a cycle life of greater than or equal to 100 cycles and less than or equal to 10,000 cycles, the battery has a cycle life of between greater than or equal to 500 cycles and less than or equal to 10,000 cycles). Other ranges are also possible. The values of cycle life expressed above may be appropriate for any of a variety of appropriate thresholds, as described in the preceding paragraph. For example, the values of cycle life expressed above may refer to the cycle life determined using an 80% threshold value. Any of the foregoing cycle lives may be applicable during constant-current or constant-voltage charging, or during charging and/or discharging with time-variant voltage and current, as the disclosure is not so limited.

The cycle life of batteries may depend on the rate of charge and/or discharge of the battery. One advantage of the electrodes described herein is that long cycle lives may be achieved, even in batteries that undergo rapid charge and/or discharge. Thus, the cycle life ranges and thresholds described above may be appropriate, even for batteries charged and/or discharged at a rate within a range described above. For example, the battery may have a cycle life of greater than or equal to 100 cycles with an 80% threshold value relative to the initial maximum capacity of the battery, even when charging and/or discharging its entire charge capacity in less than or equal to 6 minutes during cycling.

According to certain embodiments, the electrode (e.g., electrochemically active charge storage material) advantageously delivers a relatively high proportion amount of its charge capacity at a voltage higher than that of a Li⁺/Li standard reference electrode. In some embodiments, for example, the electrode delivers at least 50%, at least 60%, at least 70%, at least 80%, at least 85%, at least 90%, at least 95%, or at least 99% of its charge capacity at a voltage higher than 2.0 V vs. Li⁺/Li standard reference electrode. In certain embodiments, the electrode delivers less than 100%, less than or equal to 99%, less than or equal to 95%, less than or equal to 90% or less than or equal to 85% of its charge capacity at a voltage higher than 2.0 V vs. Li⁺/Li standard reference electrode. Combinations of the above recited ranges are also possible (e.g., the electrode delivers between at least 50% and less than 100% of its charge capacity at a voltage higher than 2.0 V vs. Li⁺/Li standard reference electrode, the electrode delivers between at least 85% and less than 95% of its charge capacity at a voltage higher than 2.0 V vs. Li⁺/Li standard reference electrode). Other ranges are also possible.

According to certain embodiments, the electrode (e.g., electrochemically active charge storage material) advantageously delivers a relatively high proportion amount of its charge capacity at a voltage higher than that of a Na⁺/Na standard reference electrode. In some embodiments, for example, the electrode delivers at least 50%, at least 60%, at least 70%, at least 80%, at least 85%, at least 90%, at least 95%, or at least 99% of its charge capacity at a voltage higher than 2.0 V vs. Na⁺/Na standard reference electrode. In certain embodiments, the electrode delivers less than 100%, less than or equal to 99%, less than or equal to 95%, less than or equal to 90% or less than or equal to 85% of its charge capacity at a voltage higher than 2.0 V vs. Na⁺/Na standard reference electrode. Combinations of the above recited ranges are also possible (e.g., the electrode delivers between at least 50% and less than 100% of its charge capacity at a voltage higher than 2.0 V vs. Na⁺/Na standard reference electrode, the electrode delivers between at least 85% and less than 95% of its charge capacity at a voltage higher than 2.0 V vs. Na⁺/Na standard reference electrode). Other ranges are also possible.

The electrode may advantageously deliver its charge capacity at a high average voltage, relative to an appropriate standard reference electrode (e.g., a Li⁺/Li standard reference electrode or a Na⁺/Na standard reference electrode). For example, in some embodiments the electrode is configured to deliver an average voltage of greater than or equal to 1.8 V, greater than or equal to 1.9 V, greater than or equal to 2.0 V, greater than or equal to 2.1 V, or greater than or equal to 2.2 V while delivering its charge capacity. In some embodiments, the electrode delivers an average voltage of less than or equal to 3.0 V, less than or equal to 2.9 V, less than or equal to 2.8 V, less than or equal to 2.7 V, less than or equal to 2.6 V, or less than or equal to 2.5 V while delivering its charge capacity. Combinations of the above recited ranges are also possible (e.g., the electrode delivers an average of greater than or equal to 1.8 V and less than or equal to 3.0 V while delivering its charge capacity). Other ranges are also possible.

A typical battery also would include, of course, current collectors, external circuitry, housing structure, and the like. Those of ordinary skill in the art are well aware of the many arrangements that can be utilized with the general schematic arrangement as shown in the figures and described herein.

The following application is incorporated herein by reference, in its entirety, for all purposes: International Application No. PCT/US22/13925, filed January 1. 2022, entitled "FUSED AROMATIC MOLECULES AS ELECTRODE MATERIALS."

The following examples are intended to illustrate certain embodiments of the present disclosure, but do not exemplify the full scope of the disclosure.

### EXAMPLE 1

This example describes use of BTABQ in non-limiting electrodes of lithium-ion batteries comprising organic, non-aqueous solvent systems (the commercial solvent LP30, comprising 1:1 EC:EMC and LiPF₆ was used), and demonstrates the excellent properties of the resulting batteries.

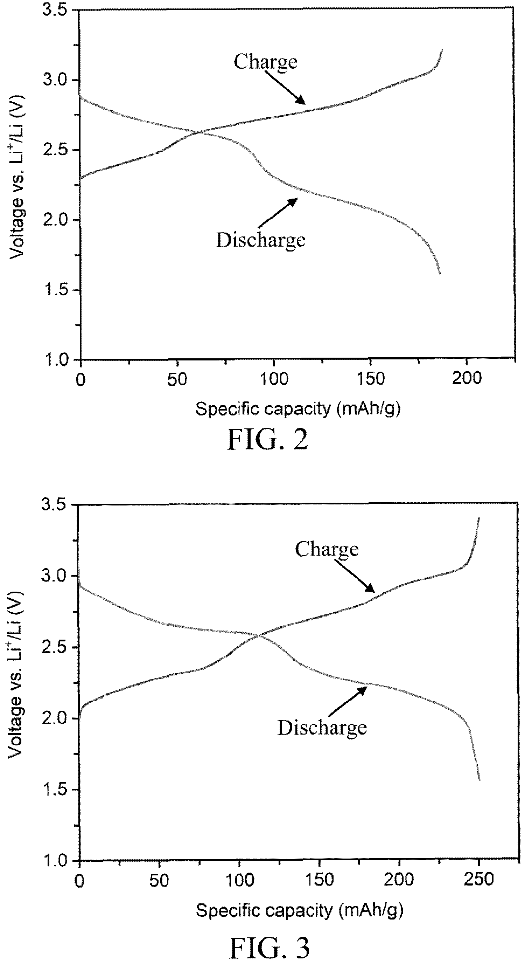

A first electrode, composed of BTABQ with a mass loading of 2 mg/cm² and with no conductive or polymeric additives, was prepared for use as a cathode in a first battery, Battery 1, with a lithium metal anode. Battery 1 was configured to deliver about 200 mAh/g of active material in the cathode, relative to the mass of the BTABQ electrode. FIG. 2 presents the voltage of Battery 1, which included exactly one electrochemical cell, measured relative to a Li+/Li standard reference electrode, during charging and discharging at a rate of 0.4 C (such that Battery 1 discharged completely after 2.5 hours).

A second battery, Battery 2, was prepared similarly to the first battery, except that the cathode was composed of BTABQ mixed with carbon black and PVDF in an 8:1:1 mass ratio. Battery 2 delivered a discharge capacity of 251 mAh/g of active material in the cathode, relative to the mass of the BTABQ electrode, when tested in a cell similar to the cell described above. FIG. 3 presents the voltage of Battery 2, which included exactly one electrochemical cell, measured relative to a Li⁺/Li standard reference electrode, during charging and discharging at a rate of 0.3 C (such that Battery 2 discharged completely after 3.34 hours). This demonstrates that the capacity of BTABQ electrodes may, in some embodiments, be improved by addition of inactive materials such as carbon black and PVDF.

These examples demonstrate the good performance of batteries comprising BTABQ as an active material of an electrode.

### EXAMPLE 2

This example describes use of BTABQ in a non-limiting electrode of a sodium-ion battery, Battery 3, comprising a non-aqueous solvent system.

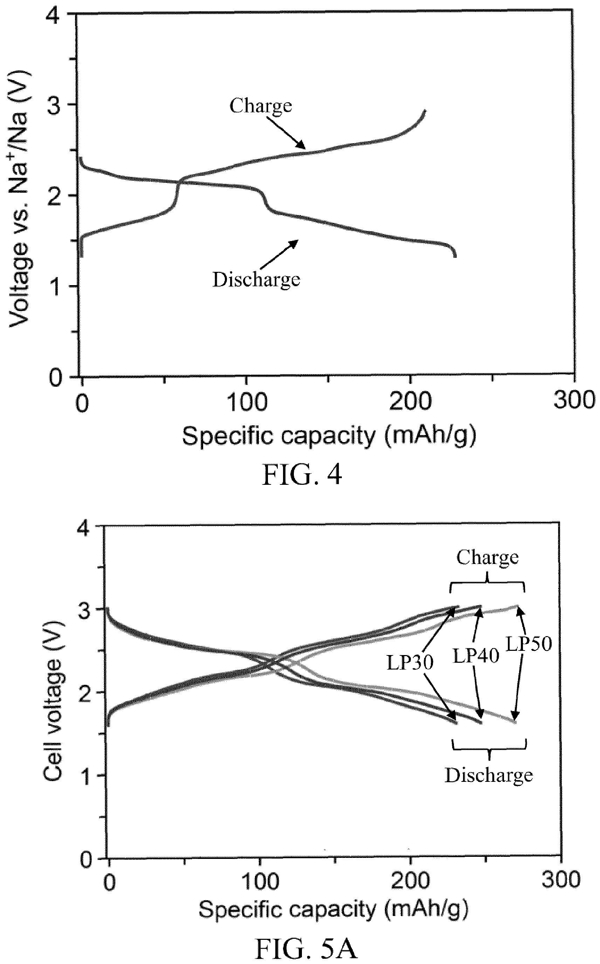

In Battery 3, a cathode was composed of BTABQ mixed with carbon black and PVDF in an 8:1:1 mass ratio and an anode was composed of sodium. Battery 3 delivered a discharge capacity of 230 mAh/g of active material in the cathode. FIG. 4 presents the voltage of Battery 3, which included exactly one electrochemical cell, measured relative to a Na⁺/Na standard reference electrode, during charging and discharging at a rate of 0.8 C (such that Battery 3 discharged completely after 1.25 hours).

This example demonstrates that battery electrodes comprising BTABQ retained their usefulness in sodium-ion batteries, and can deliver a battery capacity similar to the battery capacity of a comparable cathode in a lithium-ion battery.

### EXAMPLE 3

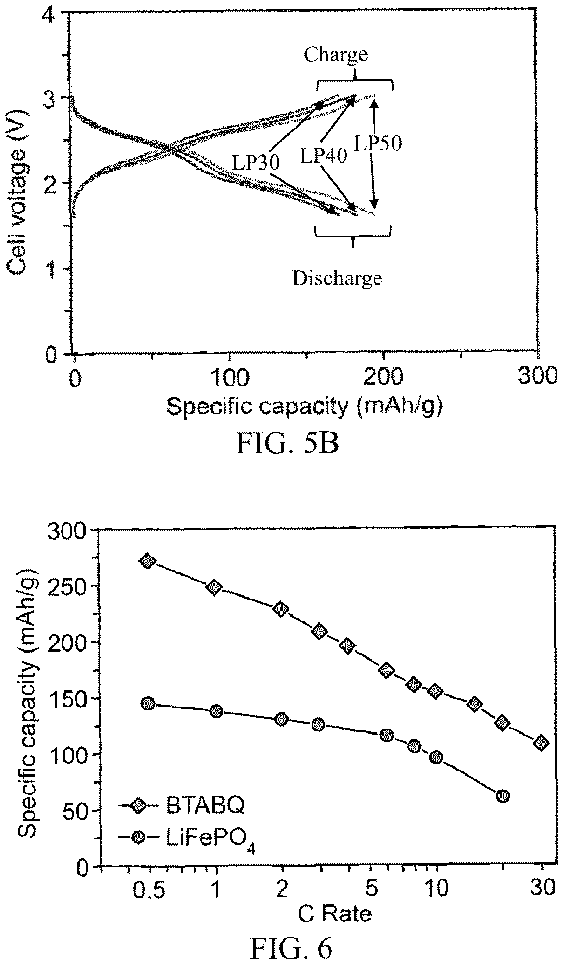

This example demonstrates the good performance of non-limiting BTABQ anodes in batteries that include commercially available battery electrolytes. In this example, batteries with lithiated graphite and BTABQ cathodes were prepared using different, non-limiting organic electrolyte solvents-LP30, LP40, and LP50. LP30, LP40, and LP50 are commercially available electrolytes comprising various mixtures of ethylene carbonate (EC), propylene carbonate (PC), dimethyl carbonate (DMC), and/or ethylmethyl carbonate (EMC), and LiPF6. (LP30 included 1:1 EC:DMC, LP40 included 1:3 PC:DMC, and LP50 included 1:1 EC:EMC.) FIGS. 5A-5B present the voltage of the batteries, measured relative to a Li⁺/Li standard reference electrode, during charging and discharging of the batteries at various rates. The batteries were charged and discharged at two different charging rates-0.5 C (FIG. 5A) and 4 C (FIG. 5B). As shown, the batteries were able to deliver high capacities at both charging rates, demonstrating the utility of the cathodes for rapid charging of batteries.

### EXAMPLE 4

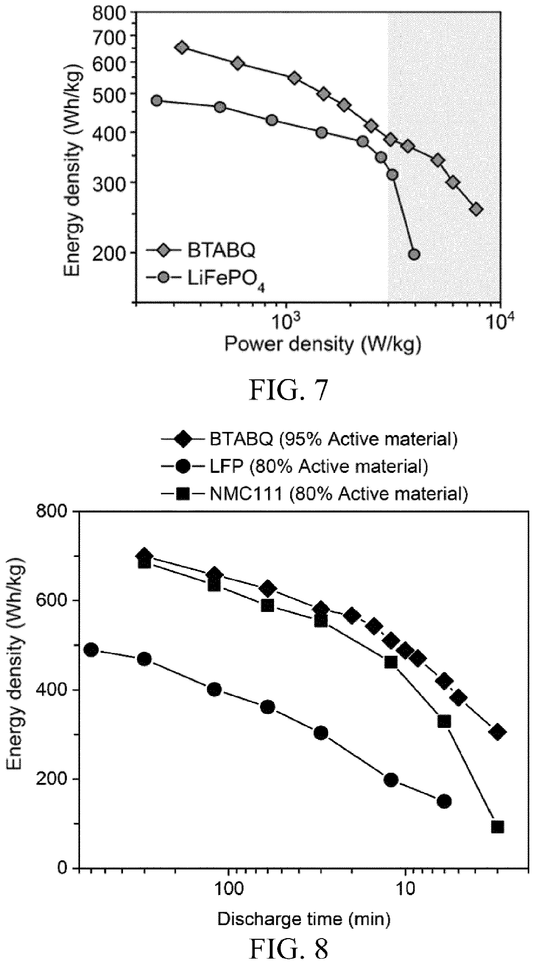

This example compares a lithium-ion battery (Battery 4) with a BTABQ cathode to a similar battery (Reference Battery 1) prepared using a conventional LiFePO₄ cathode. Battery 4 and Reference Battery 1 included a lithium anode, and both batteries were single-cell batteries including an identical organic, non-aqueous solvent system. Each battery was charged and discharged at a plurality of charging rates in order to determine its capacity at each charging rate. FIG. 6 presents the specific capacity of each battery (the charge/discharge capacity of the battery per gram of cathode) as a function of the charging rate. As shown, Battery 4 (labeled "BTABQ" in FIG. 6) had a higher specific capacity than Reference Battery 1 (labeled "LiFePO₄" in FIG. 6) at every charging rate. Reference Battery 1 delivered a higher voltage than Battery 4, relative to an Li⁺/Li reference electrode. FIG. 7 therefore presents the energy density of the batteries at a variety of power densities. The energy density of Battery 4 (labeled "BTABQ" in FIG. 7) exceeded the energy density of Reference Battery 1 (labeled "LiFePO₄" in FIG. 7) at every power density. The difference between the energy density of Battery 4 and the energy density of Reference Battery 1 was particularly exaggerated at high power densities (exceeding 2×10³ W/kg), where energy density of Reference Battery 1 dropped precipitously while, in contrast, the energy density of Battery 4 declined much more slowly.

These results demonstrate batteries comprising BTABQ cathodes can outperform conventional batteries, particularly during rapid charging of batteries.

### EXAMPLE 5

This example compares discharge of a non-limiting lithium-ion battery comprising an electrode comprising 95% BTABQ, 2.5% carboxymethylcellulose (CMC), and 2.5% conductive carbon additive. Battery 5, along with analogous reference batteries prepared using the conventional high-performance cathode active materials LiFePO₄ (LFP, used in Reference Battery 2) and LiNi_{1/3}Co_{1/3}Mn_{1/3}O₂ (NCM111, used in Reference Battery 3) were prepared. Each reference battery included the cathode active material in the cathode in proportion of 80%, a typical concentration, and included 10% PVDF binder and 10% conductive additive. FIG. 8 presents the energy density of the batteries during discharge of the batteries under constant current discharge conditions. As shown, Battery 5 (labeled "BTABQ" in FIG. 8) had a higher energy density at every stage of discharge than Reference Battery 2 (labeled "LFP" in FIG. 8) and Reference Battery 3 (labeled "NCM111" in FIG. 8).

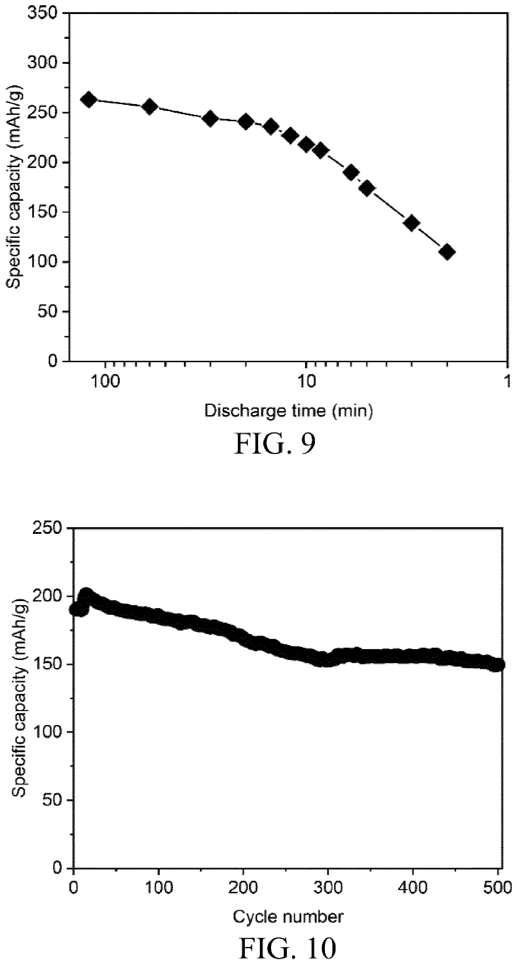

FIG. 9 shows the specific capacity of Battery 5 as a function of discharge time during initial discharge, and FIG. 10 presents the specific capacity of Battery 5 as a function of the number of charge-discharge cycles to which Battery 5 was subjected (wherein Battery 5 was fully charged and discharged at a rate of 4C, corresponding to total charge and discharge over a period of 15 minutes). Cycling was halted when the battery reached its 80% cycle life, which occurred at approximately 500 cycles.

This example demonstrates that electrodes comprising BTABQ can outperform state-of-the-art metal-based electrodes, even while subjected to rapid charge-discharge cycles and retaining a long cycle life.

While several embodiments of the present disclosure have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present disclosure. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present disclosure is/are used. Those skilled in the art will recognize, or be able to ascertain using no more than routine experimentation, many equivalents to the specific embodiments of the disclosure described herein. It is, therefore, to be understood that the foregoing embodiments are presented by way of example only and that, within the scope of the appended claims and equivalents thereto, the disclosure may be practiced otherwise than as specifically described and claimed. The present disclosure is directed to each individual feature, system, article, material, and/or method described herein. In addition, any combination of two or more such features, systems, articles, materials, and/or methods, if such features, systems, articles, materials, and/or methods are not mutually inconsistent, is included within the scope of the present disclosure.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Other elements may optionally be present other than the elements specifically identified by the "and/or" clause, whether related or unrelated to those elements specifically identified unless clearly indicated to the contrary. Thus, as a non-limiting example, a reference to "A and/or B," when used in conjunction with open-ended language such as "comprising" can refer, in one embodiment, to A without B (optionally including elements other than B); in another embodiment, to B without A (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

As used herein, "wt%" is an abbreviation of weight percentage. As used herein, "at%" is an abbreviation of atomic percentage.

Some embodiments may be embodied as a method, of which various examples have been described. The acts performed as part of the methods may be ordered in any suitable way. Accordingly, embodiments may be constructed in which acts are performed in an order different than illustrated, which may include different (e.g., more or less) acts than those that are described, and/or that may involve performing some acts simultaneously, even though the acts are shown as being performed sequentially in the embodiments specifically described above.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

In the claims, as well as in the specification above, all transitional phrases such as "comprising," "including," "carrying," "having," "containing," "involving," "holding," and the like are to be understood to be open-ended, i.e., to mean including but not limited to. Only the transitional phrases "consisting of' and "consisting essentially of' shall be closed or semi-closed transitional phrases, respectively, as set forth in the United States Patent Office Manual of Patent Examining Procedures, Section 2111.03.

## Claims

1. A battery, comprising:
an electrode comprising an active material comprising a *bis*-tetraamino-benzoquinone molecule of the structure: 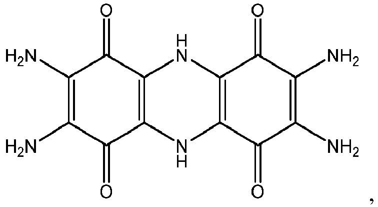 and/or a dimer, tautomer, oligomer, or polymer thereof; and
an electrolyte comprising an organic, non-aqueous solvent system.

2. A battery, comprising:
an electrode comprising an organic, active material, wherein the battery is configured such that, when fully discharged, the battery can be charged to a capacity of greater than or equal to 135 mAh per gram of the electrode in less than or equal to 6 minutes.

3. A battery, comprising:
an electrode comprising an active material;
wherein the active material comprises at most trace amounts of Ni and Co; and
wherein the battery is configured such that, when fully discharged, the battery can be charged to a capacity of greater than or equal to 135 mAh per gram of the electrode in less than or equal to 6 minutes.

4. A battery as in any one of claims 2-3, wherein the active material comprising a *bis*-tetraamino-benzoquinone molecule of the structure: 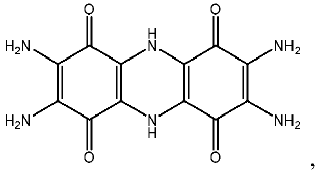 and/or a tautomer, oligomer, and/or polymer thereof.

5. A battery as in any one of the preceding claims, wherein the active material is the bis-tetraamino-benzoquinone molecule with the structure:

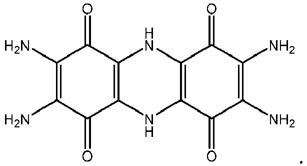

6. A battery as in any one of the preceding claims, wherein the *bis*-tetraamino-benzoquinone is an oligomer, having the structure: 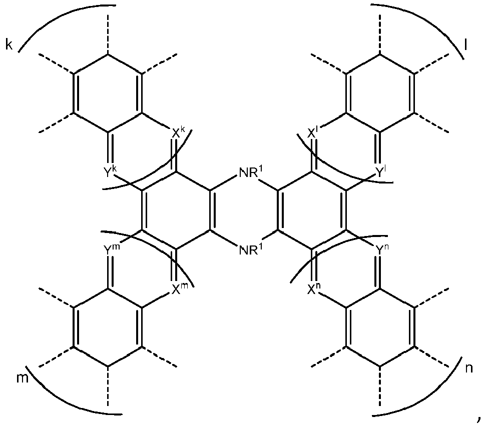 wherein when k is greater than 0, X^{k} and Y^{k} are N; when k is 0, X^{k} is O and Y^{k} is NR¹; when 1 is greater than 0, X^{l} and Y^{l} are N; when k is 0, X^{l} is O and Y^{l} is NR^{1;} when m is greater than 0, X^{m} and Y^{m} are N; when m is 0, X^{m} is O and Y^{m} is NR¹; when n is greater than 0, Xⁿ and Yⁿ are N; when n is 0, Xⁿ is O and Yⁿ is NR¹, and wherein R¹ is selected from the group consisting of hydrogen (-H), optionally substituted alkyl (e.g., -CH₃), optionally substituted alkenyl (e.g., -CH=CH₂), or optionally substituted alkynyl (e.g., - C≡CH), and
wherein a sum of k, l, m, and n is less than or equal to 8.

7. A battery as in any one of the preceding claims, wherein the battery has an 80% capacity cycle life of greater than or equal to 100 cycles when cycled with a charging rate of greater than or equal to 10 C.

8. A battery as in any one of the preceding claims, wherein the battery has an 80% capacity cycle life of greater than or equal to 500 cycles when cycled with a charging rate of greater than or equal to 10 C.

9. A battery as in any one of the preceding claims, wherein the electrode is a cathode

10. A battery as in any one of the preceding claims, wherein the electrode is a first electrode, and wherein the battery further comprises a second electrode

11. A battery as in any one of the preceding claims, wherein the battery is configured such that, when fully discharged, the battery can be charged to a capacity of greater than or equal to 135 mAh per gram of the electrode in less than or equal to 6 minutes

12. A battery as in any one of the preceding claims, wherein the battery is configured such that, when fully discharged, the battery can be charged to a capacity of greater than or equal to 150 mAh per gram of the electrode in less than or equal to 6 minutes

13. A battery as in any one of the preceding claims, wherein the battery is configured such that, when fully discharged, the battery can be charged to a capacity of greater than or equal to 235 mAh per gram of the electrode in less than or equal to 1 hour.

14. A battery as in any one of the preceding claims, wherein the battery comprises an electrolyte comprising an organic, non-aqueous solvent system.

15. A battery as in any one of the preceding claims, wherein the organic, non-aqueous solvent system comprises water in an amount of less than or equal to 5 wt%.

16. A battery as in any one of the preceding claims, wherein the organic, non-aqueous solvent system comprises no water, or comprises only a trace amount of water.

17. A battery as in any one of the preceding claims, wherein the battery is a lithium-ion battery.

18. A battery as in any one of the preceding claims, wherein the battery is a sodium-ion battery.

19. A battery as in any one of the preceding claims, wherein the organic, non-aqueous solvent system comprises propylene carbonate (PC), ethylene carbonate (EC), dimethyl carbonate (DMC), diethyl carbonate (DEC), 1,3-dioxolane (DOL), dimethoxyethane (DME), diethylene glycol dimethyl ether (diglyme), and/or tetraethylene glycol dimethyl ether (TEGDME).

20. A battery as in any one of the preceding claims, wherein the organic, non-aqueous solvent system comprises a salt comprising: Li⁺, Na⁺, K⁺, or Mg²⁺; and hexafluoroarsenate, hexafluorophosphate, perchlorate, tetrafluoroborate, tris(pentafluoroethyl)trifluorophosphate, trifluoromethanesulfonate, bis(fluorosulfonyl)imide, cyclo-difluoromethane-1,1-bis(sulfonyl)imide), bis(perfluoroethanesulfonyl)imide, bis(trifluoromethanesulfonyl)imide, bis(perfluoroethanesulfonyl)imide, bis(oxalate)borate, difluoro(oxalato)borate, bis(fluoromalonato)borate, tetracyanoborate, dicyanotriazolate, dicyano-trifluoromethyl-imidazole, or dicyano-pentafluoroethyl-imidazole.

21. A battery as in any one of the preceding claims, wherein the battery has an average discharge voltage of greater than or equal to 2.3 V.
